# FASCICULE DE BREVET EUROPEEN

(11) **EP 3 387 049 B1**
(45) Date de publication et mention de la délivrance du brevet: **04.08.2021**
(21) Numéro de dépôt: 16734319.3
(22) Date de dépôt: 29.06.2016
(51) Int. Cl.: G04B 37/22, C08J 7/02

(54) **PROCÉDÉ D'IMPRÉGNATION D'UNE PIÈCE EN MATIÈRE PLASTIQUE**
IMPRÄGNIERVERFAHREN EINES KUNSTSTOFFTEILS
METHOD FOR IMPREGNATING A PLASTIC PART

(30) Priorité: 08.12.2015 EP 15198531
(43) Date de publication de la demande: 17.10.2018
(73) Titulaire: The Swatch Group Research and Development Ltd, 2074 Marin (CH)
(72) Inventeur: FRANÇOIS, Nicolas, 2000 Neuchâtel (CH)
(74) Mandataire: ICB SA
(86) Numéro de dépôt international: PCT/EP2016/065211
(87) Numéro de publication internationale: WO 2017/097440

(56) Documents cités:
- EP-A1- 0 683 804
- EP-A2- 0 200 197
- WO-A1-03/085042
- CA-A1- 2 007 781
- US-A1- 2008 295 457
- DATABASE WPI Week 200744 2007 Thomson Scientific, London, GB; AN 2007-454283 XP002757648, & KR 2006 0126329 A (YANG W D) 7 décembre 2006 (2006-12-07)

## Description

### Domaine de l'invention

La présente invention concerne un procédé pour imprégner une pièce en matière plastique avec un additif à l'aide d'un fluide supercritique. Plus précisément, l'invention concerne un procédé d'imprégnation de pièces d'horlogerie, ainsi que les pièces obtenues.

### Arrière-plan de l'invention

Le CO₂ supercritique a des applications commerciales connues, telles que le nettoyage poussé de pièces industrielles ou encore l'extraction de la caféine du café.

De nombreux procédés d'imprégnation à l'aide d'un fluide supercritique ont fait l'objet de brevets et sont connus pour leur rapidité et leurs moindres coûts. Le dioxyde de carbone est souvent utilisé pour son faible coût et les risques très faibles lors de sa manipulation.

Ainsi, il est connu du document EP 0 200 197 d'imprégner des pièces en matériau polymère thermoplastique d'un matériau odorant à l'aide d'un fluide dans ou proche des conditions supercritiques de température et de pression. Dans ce document l'imprégnation est réalisée à une pression de 17 MPa et à une température comprise entre 25°C et 60°C pour des polymères tels que le polypropylène, le polyéthylène, les copolymères d'éthylène-acétate de vinyle (EVA) et les copolymères d'acrylate d'éthyle d'éthylène.

Il est également connu du document EP 0 683 804 un procédé d'imprégnation d'un substrat polymérique avec un additif au moyen d'un fluide supercritique. Dans ce document l'imprégnation est réalisée à une pression comprise de préférence entre 7 MPa et 30 MPa et à une température comprise entre 30°C et 60°C pour des polymères tels que les polyoléfines, les polyamides, les polyuréthanes, les silicones, l'albumine, les polymères d'acide lactique et glycolique, et les combinaisons de ceux-ci.

Ainsi, des procédés d'imprégnation utilisant le CO₂ supercritique ont déjà été décrits dans l'art antérieur, comme dans le document CA 2 007 781. Toutefois aucun d'entre eux ne décrit un procédé rapide, facile à mettre en œuvre et utilisable quel que soit le type de matériaux polymères à imprégner. En effet, les procédés décrits sont relativement long, deux heures ou plus, et la pression utilisée est très élevée, entre 7 MPa et 30 MPa.

D'après les constatations de l'inventeur ces procédés en particulier ne permettent pas de réaliser l'imprégnation de pièces d'horlogerie fabriquées à partie de matières polymères tout en conservant une qualité satisfaisante de ces pièces pour l'industrie horlogère (tolérances dimensionnelles fines, qualité de surface et qualité de la coloration), et cela plus spécifiquement pour les matériaux en copolymère tels que le méthylméthacrylate-acrylonitrile-butadiène-styrène (M-ABS) et les matériaux en polyuréthane thermoplastique (TPU).

En effet, après expérimentations l'inventeur a constaté que les paramètres de pression et température utilisés dans l'art antérieur pour imprégner certains matériaux conduisaient à de nombreux défauts dans les matières, voire des déformations importantes ou un moussage de la pièce, ce qui est particulièrement gênant pour la fabrication de pièces d'horlogerie en matière plastique par exemple.

### Résumé de l'invention

L'invention a notamment pour objectif de pallier aux différents inconvénients de ces techniques connues pour une application dans le monde horloger ou joaillier.

Plus précisément, un objectif de l'invention est de fournir un procédé permettant d'imprégner à cœur rapidement des pièces finies en matière plastique avec un additif qui serait trop sensible à la température ou au cisaillement pour être ajouté lors d'un processus classique de mélangeage ou de moulage. Un tel procédé permet également de gagner en flexibilité pour la production. On peut avec un tel procédé facilement mettre en place par modèle le moulage d'une seule référence de couleur blanche ou transparente sans additif. Cette référence est ensuite colorée ou fonctionnalisée (c'est-à-dire pourvue d'une nouvelle propriété) par le procédé selon les besoins du marché.

Un autre objectif de l'invention est de fournir un procédé permettant de réduire les temps et les coûts de fabrication de montres en matière plastique.

Ces objectifs, ainsi que d'autres qui apparaîtront plus clairement par la suite, sont atteints selon l'invention à l'aide d'un procédé d'imprégnation à cœur d'une pièce finie en matière plastique avec au moins un additif. Selon l'invention, le procédé comprend les étapes telles que définies dans la revendication 1.

Conformément à d'autres variantes avantageuses du procédé selon l'invention :
- le matériau est choisi parmi les polyuréthanes thermoplastiques, les polyamides, les méthyl acrylonitrile butadiène styrène ou les polymétacrylates de méthyl ;
- le liquide support est choisi parmi l'hexane, l'isopropanol, le d-limonène ;
- l'additif est choisi parmi des colorants, des agents anti-odeurs, des fragrances, des additifs actifs cosmétiques ;
- on imprègne la matière plastique avec une combinaison d'au moins deux additifs ;
- l'imprégnation est réalisée sous flux constant ;
- le procédé comprend une étape de lavage de la pièce en matière plastique après avoir relâché la pression dans l'enceinte pour éliminer les résidus ;
- l'étape de lavage est effectuée à l'eau claire et au moyen d'une brosse ou similaire.

L'invention concerne aussi toutes pièces d'horlogerie et joaillerie en matériau copolymère obtenu par le procédé conforme à l'invention.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- la figure 1 est une photo de pièces d'horlogerie en matière plastique illustrant les résultats d'un premier test ;
- la figure 2 est une photo de pièces d'horlogerie en matière plastique illustrant les résultats d'un deuxième test ;
- la figure 3 est une photo d'une coupe d'une pièce d'horlogerie en matière plastique illustrant les résultats d'un troisième test ;
- la figure 4 est une photo d'une pièce d'horlogerie en matière plastique illustrant les résultats d'un quatrième test ;
- la figure 5 est une photo d'une pièce d'horlogerie en matière plastique illustrant les résultats d'un cinquième test ;
- la figure 6 est une photo d'une pièce d'horlogerie en matière plastique illustrant les résultats d'un sixième test ;
- la figure 7 est une photo de pièces d'horlogerie en matière plastique illustrant les résultats d'un septième test.
- la figure 8 est une photo d'une pièce d'horlogerie en matière plastique illustrant les résultats d'un huitième test ;
- La figure 9 est une photo d'une pièce d'horlogerie en matière plastique illustrant les résultats d'un neuvième test.

### Description détaillée des modes de réalisation préférés

L'invention concerne un procédé d'imprégnation à cœur d'une pièce finie en matière plastique avec au moins un additif. Selon l'invention, le procédé comprend les étapes suivantes :
- dissoudre au moins un additif dans un liquide support pour former une solution ;
- placer à pression ambiante la pièce en matière plastique dans une enceinte pouvant être mise sous pression ;
- fermer hermétiquement l'enceinte ;
- imprégner la pièce en matière plastique de la solution au moyen d'un fluide dans des conditions supercritiques ou proche de conditions supercritiques dans l'enceinte à une pression comprise entre 3 MPa et 6 MPa, à une température comprise entre 40°C et 65°C pendant une durée comprise entre 1 min et 10 min ;
- relâcher la pression dans l'enceinte pour que le liquide support diffuse à l'extérieur de la pièce en matière plastique et pour piéger l'au moins un additif à l'intérieur de la pièce en matière plastique.

Par fluide dans des conditions supercritiques, ou fluide supercritique, on entend au sens de la présente invention un fluide utilisé à une température et une pression supérieure à sa valeur critique de manière à le placer dans son état supercritique et ainsi le disperser plus facilement dans un matériau, comme les polymères, les copolymères ou encore les élastomères.

Par fluide proche des conditions supercritiques on entend au sens de la présente invention un fluide utilisé à une pression légèrement inférieure à sa valeur critique de manière à obtenir un mélange liquide vapeur.

Par imprégnation à cœur, on entend une pénétration de l'additif dans l'épaisseur de la matière de manière à avoir une coloration résistante à l'usure de la pièce.

Par pièce finie, on entend toute pièce usinée provenant par exemple d'une opération d'injection, d'extrusion, de thermoformage, de moulage, et prête à être assemblée.

Il existe de nombreux fluides supercritiques pour imprégner des matériaux, et selon l'invention on utilisera le CO₂ d'une part pour éviter d'altérer certains additifs et, d'autre part, pour traiter les matériaux destinés à être en contact avec la peau et éviter des réactions cutanées.

Le CO₂ permet également de limiter les coûts de l'opération d'imprégnation de par sa température et sa pression pour atteindre l'état supercritique.

Selon l'invention, la pression est comprise entre 3 MPa et 6 MPa, et la température est comprise entre 40°C et 65°C.

L'inventeur a constaté qu'au-delà de ces paramètres de nombreux défauts étaient présents dans la matière de la pièce en matière plastique suivant les polymères utilisés, et notamment pour les thermoplastiques suivants qui sont couramment utilisés pour réaliser des montres en matière plastique : les polyuréthanes thermoplastiques, les polyamides, les méthyl acrylonitrile butadiène styrène, les polymétacrylates de méthyl.

Par additif, on entend au sens de la présente invention, tout additif organique ou inorganique, de densité inférieure à 3 et de taille de particules inférieure à 50 microns, qu'il soit soluble ou peu soluble dans un milieu liquide. Ce procédé n'est donc pas limité aux additifs solubles dans un milieu liquide.

Selon un mode de réalisation de l'invention, l'additif peut être un colorant ou un pigment (organique ou inorganique). On peut citer à titre d'exemple les colorants azoïques.

L'additif peut également être une substance active de la cosmétique, on peut citer à titre d'exemple l'acide hyaluronique ou les céramides.

L'additif peut aussi être un agent anti-odeurs tel que le zinc pyrithium ou bien une fragrance comme les huiles essentielles par exemple.

Selon l'invention, la matière plastique peut être imprégnée d'une combinaison d'additifs. On peut par exemple imprégner la matière plastique d'un colorant et d'un agent anti-odeurs.

Par liquide support, on entend au sens de la présente invention, un co-solvant tel que l'hexane, l'isopropanol ou encore le d-limonène.

Selon un mode de réalisation préférentiel de l'invention, le procédé est mis en œuvre sous flux constant de CO₂ supercritique, c'est-à-dire que tous les réactifs sont mis simultanément en présence et on injecte le CO₂ supercritique pendant une durée déterminée. Par exemple, dans la quatrième étape de l'invention, on injecte du CO₂ supercritique pendant un temps prédéterminé dans l'enceinte recevant le mélange obtenu lors de la première étape et la pièce en matière plastique à imprégner.

Selon un mode de réalisation de l'invention, le matériau à imprégner est choisi parmi la famille des acrylates ou des polyuréthanes.

La première étape du procédé selon l'invention permet de réaliser le mélange intime de l'additif et du co-solvant avant l'étape de diffusion. Par mélange intime on entend un mélange dans lequel l'additif et le co-solvant se retrouvent uniformément répartis (soit une dispersion, soit une dissolution) au sein du mélange obtenu. La première étape permet donc d'optimiser l'imprégnation et d'obtenir de meilleurs résultats. Le mélange obtenu à la fin de la première étape est donc de préférence un mélange liquide de manière à diminuer le temps d'imprégnation lors de la quatrième étape. Les trois premières étapes du procédé sont réalisées à la température et à la pression ambiante.

La quatrième étape du procédé selon l'invention permet d'imprégner le matériau avec l'additif. Dans un mode de réalisation particulier, la quatrième étape est réalisée dans une enceinte fermée hermétiquement. Le mélange obtenu lors de la première étape est introduit dans une enceinte avec la pièce en matière plastique à imprégner, avant de fermer l'enceinte hermétiquement. Lors de la troisième et de la quatrième étape du procédé, l'enceinte est fermée, mise sous pression et portée à la température désirée pendant le temps nécessaire pour que le CO₂ alors sous forme proche-supercritique permette l'imprégnation de la pièce en matière plastique par l'additif à la teneur souhaitée. Plus le traitement est long, et plus la pièce en matière plastique sera imprégnée avec toutefois un phénomène de saturation lorsque les porosités de la pièce en matière plastique sont comblées.

Durant la quatrième étape, la pièce en matière plastique à imprégner reste sous forme solide. Selon l'invention, la température lors de la quatrième étape est comprise entre 40 et 65°C. De telles températures permettent d'éviter une détérioration de la matière plastique lors de l'imprégnation.

Selon l'invention, la pression au cours de la quatrième étape est comprise entre 3 MPa et 6 MPa, par exemple égale à 4 MPa. De telles pressions ont pour avantage de pouvoir utiliser des infrastructures peu onéreuses par rapport à l'état de l'art.

Dans un mode de réalisation particulier, le temps de contact au cours de la quatrième étape est par exemple égal à cinq minutes. Un tel temps de traitement permet d'imprégner rapidement les pièces en matière plastique et donc de traiter une plus grande quantité de pièces.

En fonction de la coloration souhaitée, le temps d'imprégnation ou la pression peuvent être ajustés de manière à obtenir une coloration plus claire ou plus foncée.

La cinquième étape permet de récupérer et d'isoler la pièce en matière plastique imprégnée obtenue suite à la quatrième étape et éventuellement de séparer l'additif qui n'a pas imprégné la pièce en matière plastique. Pour cela, l'enceinte utilisée est dépressurisée et refroidie progressivement. Elle est ensuite maintenue à pression ambiante pendant 2 minutes.

Selon l'invention, le procédé peut comprendre une étape de lavage de la pièce en matière plastique, après avoir relâché la pression dans l'enceinte, pour éliminer les résidus restant en surface comme un surplus de colorant par exemple.

Selon un mode de réalisation préférentiel de l'invention, l'étape de lavage est effectuée de préférence à l'eau claire et au moyen d'une brosse ou équivalent. On pourrait également utiliser des jets d'eau basse pression ou encore passer les pièces imprégnées dans un bain. L'agitation du bain peut aussi être prévue et adaptée au nettoyage nécessaire.

La pièce en matière plastique imprégnée par l'additif peut être utilisée dans la fabrication de pièce d'horlogerie ou de joaillerie, et plus particulièrement les pièces d'horlogerie ou de joaillerie en plastique. En particulier, le procédé peut être utilisé dans la fabrication de boites de montre, de bracelets, de lunettes, de couronnes, de cadrans, de poussoirs, de glaces, de boucles, ou encore toute pièce en plastique faisant partie d'une montre ou d'un bijou. La présente invention concerne en outre une pièce d'horlogerie ou de joaillerie en matière plastique, sous forme solide, et imprégnée par un additif par le procédé selon la présente invention tel que décrit ci-dessus.

Ainsi, les composants horlogers ou joailliers en plastique déjà moulés ou usinés peuvent être imprégnés par ce procédé tout en conservant les propriétés initiales du composant, notamment les dimensions et les caractéristiques mécaniques.

Les exemples suivants sont donnés à titre indicatif et non limitatif. Les traitements de coloration et d'imprégnation ont été réalisés sur des boites de montres injectées dans les matières indiquées.

**Tableau 1 :**

| | Matériau | P (MPa) | T (°C) | Traitement (min) | Aération (min) | Co-solvant | Résultats |
|---|---|---|---|---|---|---|---|
| Test 1 | Acrylonitrile Butadiene Styrene | 8.3 | 60 | 45 | 10 | aucun | Moussage de la pièce |
| Test 2 | Thermoplastique polyurethane (base polyether) 65shore A | 7.6 | 50 | 30 | 10 | 6.6% hexane | Moussage de la pièce |
| Test 3 | Acrylonitrile Butadiene Styrene | 6.2 | 55 | 10 | 2 | 1.6% hexane | Moussage de la pièce |
| Test 4 | Methylmetacrylate Butadiene Styrene | 5.5 | 35 | 10 | 2 | 1.6% hexane | Moussage de la pièce |
| Test 5 | Methylmetacrylate Butadiene Styrene | 4 | 35 | 10 | 2 | 1.6% hexane | Coloration uniquement sur 100 microns dan l'épaisseur |
| Test 6 | Methylmetacrylate Butadiene Styrene | 1.5 puis 5.5 | 45 | 5 puis 10 | 2 | 1.6% in hexane | Coloration non complète dans l'épaisseur |

**Tableau 2 :**

| | Matériau | P (Mpa) | T (°C) | Traitement (min) | Aération (min) | Co-solvant | Résultats |
|---|---|---|---|---|---|---|---|
| Test 7 | Methylmetacrylate Butadiene Styrene | 5.5 | 60 | 13 | 2 | 1.6% hexane | Léger moussage donnant un aspect blanchatre |
| Test 8 | Methylmetacrylate Butadiene Styrene | 4 | 100 | 10 | 10 | 1.6% hexane | Moussage très important |
| Test 9 | Methylmetacrylate Butadiene Styrene | 4 | 60 | 10 | 10 | 1.6% hexane | Belle coloration, mais très léger blanchiment en surface |
| Test 10 | Methylmetacrylate Butadiene Styrene / Thermoplastique polyurethane | 4 | 50 | 10 | 10 | 1.6% hexane | Coloration homogène sans moussage, mais léger blanchiment en surface |
| Test 11 | Methylmetacrylate Butadiene Styrene | 4 | 50 | 5 | 5 | 1.6% hexane | Coloration homogène légèrement plus claire |
| Test 12 | Thermoplastique polyurethane (base polyether) 65shore A | 4 | 50 | 5 | 5 | 1.6% hexane | Coloration homogène |

Dans ces deux tableaux, les mêmes additifs ont été utilisés, à savoir un colorant azoïque, le chromophtal®, et un hydrocarbure aromatique, l'anthraquinone (oracet®). Un seul co-solvant est utilisé, l'hexane, et trois matières plastiques ont été testées, l'Acrylonitrile Butadiène Styrène, le thermoplastique polyuréthane (base polyéther) et le méthylmétacrylate butadiène styrène.

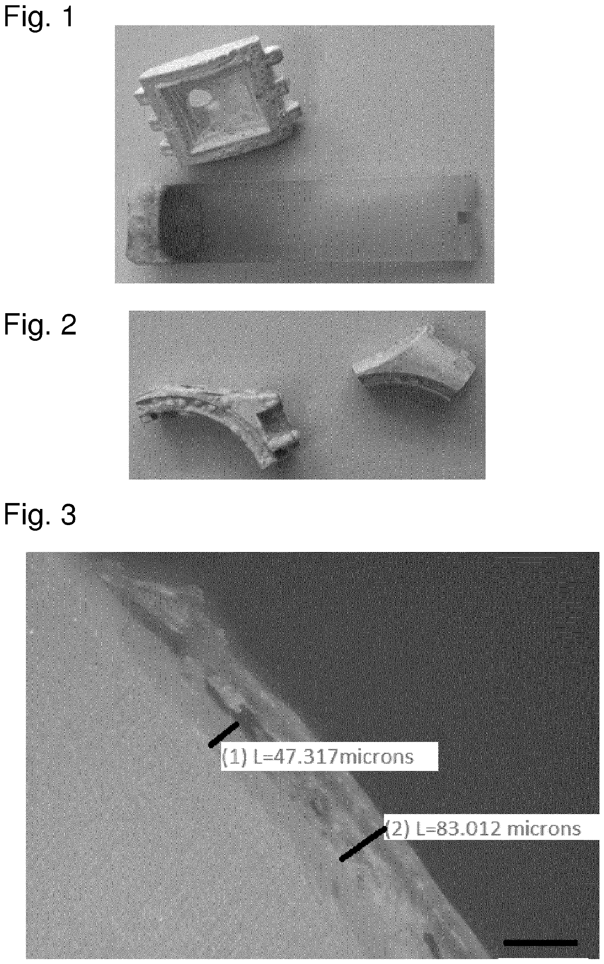

Sur la figure 1 correspondant aux tests 1 et 2, on peut observer une déformation complète de la pièce due à un moussage ainsi qu'une coloration non-uniforme. On observe ces mêmes résultats à la figure 2 pour les tests 3 et 4 ; des déformations sont visibles sur les pièces.

Sur la figure 3 correspondant au test 5, on observe que la pièce n'est colorée qu'en surface et sur une très faible profondeur ; le colorant n'a pas pénétré suffisamment en profondeur pour fournir une coloration correcte et pérenne dans le temps malgré l'usure.

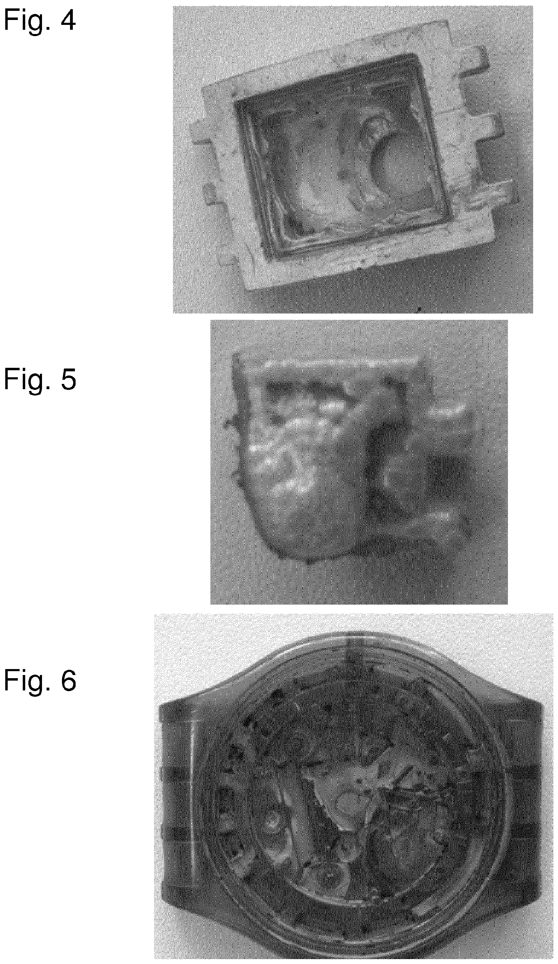

Sur la figure 4, correspondant au test 7, on observe un blanchiment de la pièce après imprégnation, ce qui n'est pas acceptable.

Sur la figure 5 correspondant au test 8, on observe un moussage important de la pièce après imprégnation qui la rend inutilisable.

La figure 6 illustre le résultat du test 9, un léger est observé à la surface de la pièce suite à l'imprégnation dû à la migration de cires utilisées dans le plastique MABS comme agent de mise en œuvre, cependant la coloration est satisfaisante.

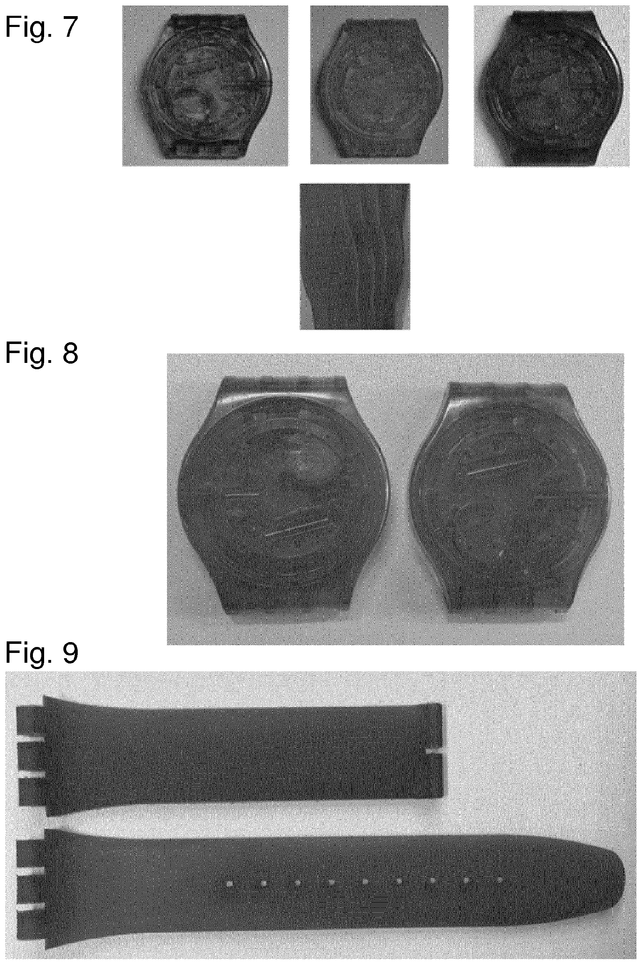

La figure 7 illustre des pièces colorées selon les conditions du test 10. On observe une coloration homogène de bonne qualité sans aucune déformation des pièces en matière plastique. Néanmoins un très léger voile blanc est visible en surface, indiquant un début de migration de certains additifs plastiques.

La figure 8 illustre deux pièces en méthacrylate butadiène styrène correspondant au test 11. On observe une coloration homogène sans déformation et sans blanchiment.

La figure 9 illustre deux pièces en polyuréthane thermoplastique correspondant au test 12. On observe une coloration homogène sans déformation et sans blanchiment.

Bien entendu, la présente invention ne se limite pas à l'exemple illustré et est susceptible de diverses variantes et modifications qui apparaîtront à l'homme de l'art.

## Revendications

1. Procédé d'imprégnation à cœur d'une pièce finie en matière plastique avec au moins un additif, **caractérisé en ce qu'**il comprend les étapes suivantes :
- dissoudre l'au moins un additif dans un liquide support pour former une solution ;
- placer à pression ambiante la pièce en matière plastique dans une enceinte pouvant être mise sous pression ;
- fermer hermétiquement l'enceinte ;
- imprégner la pièce en matière plastique de la solution au moyen de dioxyde de carbone dans des conditions proches de conditions supercritiques dans l'enceinte à une pression comprise entre 3 MPa et 6 MPa, à une température comprise entre 40°C et 65°C pendant une durée comprise entre 1 min et 10 min ;
- relâcher la pression dans l'enceinte pour que le liquide support diffuse à l'extérieur de la pièce en matière plastique et pour piéger l'au moins un additif à l'intérieur de la pièce en matière plastique.

2. Procédé selon la revendication 1, dans lequel le matériau est choisi parmi les thermoplastiques polyuréthanes, les polyamides, les méthyl acrylonitrile butadiène styrène, les polymétacrylates de méthyl.

3. Procédé selon la revendication 1 ou 2, dans lequel le liquide support est choisi parmi l'hexane, l'isopropanol ou encore le d-limonène.

4. Procédé selon l'une des revendications 1 à 3, dans lequel l'additif est choisi parmi des colorants, des agents anti-odeurs, des fragrances, des additifs actifs cosmétiques.

5. Procédé selon la revendication 4, dans lequel on imprègne la matière plastique avec une combinaison d'au moins deux additifs.

6. Procédé selon l'une des revendications 1 à 5, dans lequel l'imprégnation est réalisée sous flux constant.

7. Procédé selon l'une des revendications 1 à 6, comprenant une étape de lavage de la pièce en matière plastique pour éliminer les résidus.

8. Procédé selon la revendication 7, dans lequel l'étape de lavage est effectuée à l'eau claire et au moyen d'une brosse.

## Patentansprüche

1. Verfahren zur vollständigen Imprägnierung eines fertigen Kunststoffteils mit mindestens einem Additiv, **dadurch gekennzeichnet, dass** es die folgenden Schritte umfasst:
- Auflösen des mindestens einen Additivs in einer Trägerflüssigkeit, um eine Lösung zu bilden;
- Platzieren des Kunststoffteils unter Umgebungsdruck in einem abgeschlossenen Raum, der mit Druck beaufschlagt werden kann;
- hermetisches Abdichten des abgeschlossenen Raums;
- Imprägnieren des Kunststoffteils mit der Lösung mittels Kohlenstoffdioxid unter fast überkritischen Bedingungen in dem abgeschlossenen Raum bei einem Druck zwischen 3 MPa und 6 MPa und bei einer Temperatur zwischen 40 °C und 65 °C während für eine Dauer zwischen 1 Minute und 10 Minuten;
- Entlasten des Drucks in dem abgeschlossenen Raum, so dass die Trägerflüssigkeit aus dem Kunststoffteil diffundiert und das mindestens eine Additiv in dem Kunststoffteil eingeschlossen wird.

2. Verfahren nach Anspruch 1, wobei das Material ausgewählt ist aus thermoplastischem Polyurethan, Polyamid, Methyl-Acrylonitril-Butadien-Styrol und Methyl-Polymethacrylat.

3. Verfahren nach Anspruch 1 oder 2, wobei die Trägerflüssigkeit ausgewählt ist aus Hexan, Isopropanol oder d-Limonen.

4. Verfahren nach einem der Ansprüche 1 bis 3, wobei das Additiv ausgewählt ist aus Farbstoffen, Antigeruchsmitteln, Duftstoffen und kosmetisch aktiven Additiven.

5. Verfahren nach Anspruch 4, wobei der Kunststoff mit einer Kombination aus mindestens zwei Additiven imprägniert wird.

6. Verfahren nach einem der Ansprüche 1 bis 5, wobei die Imprägnierung bei konstanter Strömung erfolgt.

7. Verfahren nach einem der Ansprüche 1 bis 6, umfassend einen Schritt des Waschens des Kunststoffteils, um Rückstände zu entfernen.

8. Verfahren nach Anspruch 7, wobei der Waschschritt mit klarem Wasser und mittels einer Bürste durchgeführt wird.

## Claims

1. Method for the core impregnation of a finished part made of plastic material with at least one additive, **characterized in that** the method includes the following steps:
- dissolving the at least one additive in a liquid medium to form a solution;
- placing the plastic part at ambient pressure in a pressure enclosure;
- hermetically sealing the chamber;
- impregnating the plastic part with the solution by means of carbon dioxide at near supercritical conditions in the enclosure at a pressure comprised between 3 MPa and 6 MPa, at a temperature comprised between 40°C and 65°C for a duration comprised between 1 minute and 10 minutes;
- releasing the pressure inside the enclosure so that the liquid medium diffuses outside the plastic part and in order to trap the at least one additive inside the plastic part.

2. Method according to claim 1, wherein the material is chosen from thermoplastic polyurethanes, polyamides, methyl acrylonitrile butadiene styrene or poly(methyl methacrylate).

3. Method according to claim 1 or 2, wherein the liquid medium is chosen from hexane, isopropanol or d-limonene.

4. Method according to any of claims 1 to 3, wherein the additive is chosen from dyes, anti-odour agents, fragrances, active cosmetic ingredients.

5. Method according to claim 4, wherein the plastic material is impregnated with a combination of at least two additives.

6. Method according to any of claims 1 to 5, wherein the impregnation is carried out under constant flux.

7. Method according to any of claims 1 to 6, comprising a step of washing the part made of plastic material to eliminate residues.

8. Method according to claim 7, wherein the washing step is carried out with clean water and using a brush.
